(19) Europäisches Patentamt
European Patent Office
Office européen des brevets

(11) **EP 1 746 839 A1**

(12) **EUROPEAN PATENT APPLICATION**

(43) Date of publication:
**24.01.2007 Bulletin 2007/04**

(51) Int Cl.:
***H04N 7/26*** (2006.01)

(21) Application number: **05300613.6**

(22) Date of filing: **22.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Chen, Ying,**
**Bld. 3, 103 Chenghua Yuan**
**100083, Beijing (CN)**

• **Yin, Peng**
**West Windsor, NJ 08550 (US)**
• **Zhang, Feng**
**100871, Beijing (CN)**

(74) Representative: **Rittner, Karsten**
**Deutsche Thomson-Brandt GmbH,**
**European Patent Operations,**
**Karl-Wiechert-Allee 74**
**30625 Hannover (DE)**

(54) **Method and apparatus for encoding video data**

(57) SVC introduces IntraBL mode to reduce the redundancy between the reconstructed low resolution frame and the original high resolution frame. Currently the AVC 6-tap Wiener interpolation filter is used for the upsampling.

The invention provides an improvement of the coding efficiency of the enhancement layer, especially the coding efficiency of the intra coded frames, by employing adaptive 2D non-separable or 1D separable upsampling filters. Optimization techniques such as least-square fitting give the optimal solution based on the SSD (Sum of Square Differences). The filters are recorded into the bitstream and give better prediction of the high-resolution pictures, judged by distortion.

Fig.4

EP 1 746 839 A1

**Description**

Field of the invention

This invention relates to a method and an apparatus for encoding video data, and to a video signal obtained by said method or apparatus.

Background

The Joint Video Team (JVT) within the Motion Picture Expert Group (MPEG) defined a standard for Scalable Video Coding (SVC), which provides spatial, temporal, SNR and combined scalabilities. Motion-compensated temporal filtering (MCTF) is used for temporal scalability. 5/3 and Haar wavelets provide multi-resolution analysis tools for obtaining base layer (BL) and enhancement layer (EL) pictures. However, without update stage, the temporal hierarchical B pictures can also be supported by H.264/AVC. SNR scalability adopts the FGS (fine grain scalability) based schemes. Spatial scalability, however, is more important and challenging than temporal or SNR, since the resolution changes. Usually subband/wavelet based CODECs are used to provide efficient solutions for different resolutions. If the framework of a CODEC is based on Discrete Cosine Transform (DCT), like SVC, supporting spatial scalability is very inefficient.
A common technique is inter layer prediction, which reduces the redundancy between the low-resolution spatial layer (spatial BL) and the high-resolution spatial layer (spatial EL). A quarter-resolution video source is generated by 2D spatial downsampling. JSVM utilizes the MPEG--4 downsampling filter specified by

$$g[n] = [2, 0,-4,-3, 5, 19, 26, 19, 5,-3,-4, 0, 2]/64.$$

As one inter layer prediction technique JVT SVC provides an IntraBL mode, which is specified for the EL macroblocks (MBs) whose corresponding BL is also intra coded. IntraBL mode is an efficient way to support spatial scalability in SVC, especially for Intra coded frames. It is critical for improving the coding efficiency of the Intra coded frames, particularly for the high-resolution frames. Based on the MCTF group-of-picture (GOP) structure, a big part of the bit rate is allocated for low-pass frames. The performance of the tools used by Intra frame is very important. Other frames are all high-pass frames, which are coded like B frames in AVC with bi-directional prediction. Among low-pass frames, the Intra frames and Intra MBs take a large portion.
In IntraBL mode, an upsampled reconstructed picture is regarded as a direct predictor for high-pass frames, i.e. the samples from a MB of the EL are predicted by the corresponding samples in the upsampled frames. The high-resolution picture comprises the pixels of the reconstructed low-resolution picture and, for the pixels that have no direct counterparts in the low-resolution picture, interpolated pixels. To obtain these interpolated pixels for sub-pel motion compensation, the conventional solution in H.264/AVC is to use a 6-tap Wiener interpolation filter with fixed filter coefficients being [1, -5, 20, 20, -5, 1]/32.
During upsampling in JVT SVC, separate filtering is used first vertically and then horizontally on the reconstructed low-resolution picture to generate the high-resolution picture. Then the difference between the upsampled picture and the original high-resolution picture is DCT transformed and entropy coded. Since IntraBL mode uses a predictor, which is generated from the BL texture by AVC 6-tap upsampling, only the residual between the original high-resolution picture and the predictor picture needs to be coded. The predictor picture is determined by the reconstructed BL picture and the 2D texture interpolation.
One possibility is to employ different candidate filters for the upsampling, e.g. AVC 6-tap, average bilinear, right nearest neighboring and left nearest neighboring. These are considered and selected according to rate-distortion (RD) performance horizontally and vertically. However, indicator flags are required for each sub-block to be written into the bit-stream. This approach provides content dependent filtering, but the filters must be selected on MB/sub-block level, and they are separable.

Summary of the Invention

Improving the coding efficiency of the IntraBL mode is essential for the whole coding efficiency. The coding efficiency of the IntraBL mode is determined by the kind of interpolation that is used to generate the upsampled picture. Thus, an aspect of the present invention is to improve the coding efficiency of the IntraBL mode.
According to the invention, adaptive two-dimensional (2D) non-separable filters are used to replace the conventional 6-tap filter for SVC. In principle however, also adaptive pairs of 1D filters can be used.
According to the invention, a method for encoding video data performs the following steps:

First, selecting for a given slice an optimal filter. For this purpose, an optimization process can be defined with: H=SR'/(RR'), where H is a filter polynomial, S is the upsampled picture slice, R is the reconstructed low-resolution picture slice and R' is the transpose of R, and assuming that RR' is not zero. This filter is valid for a full slice, which may be a full frame.

Then the data that specify the filter, e.g. coefficients h(0),h(1),h(2),..., are written into a packet that should be transmitted immediately after the slice header.

Then a mode selection process is performed e.g. for each MB of the slice, wherein it is decided which encoding mode should be used. One of the possible modes is IntraBL, using the optimized filter previously selected for the current slice. Other modes may be e.g. Intra_4x4 or Intra16x16. The decision is based on minimized rate-distortion (RD).

If IntraBL mode is selected, then the base-layer MB is intra-coded, and the enhancement-layer MB is encoded by the following steps:

upsampling the base-layer MB,
filtering the upsampled MB with the optimized filter (2D or 2 x 1D), wherein the remaining pixels/pels are obtained by interpolation,
calculating the difference between original EL MB and reconstructed MB, and
encoding and transmitting this difference.

A decoder according to the invention performs the following steps:

First, extracting and storing filter specification data, e.g. filter coefficients h(0),h(1),h(2),... from the packet that is received immediately after the slice header, then generating or configuring a filter using the filter specification data, then selecting a MB and detecting that it was encoded in IntraBL mode, and
decoding and upsampling the selected intra-coded MB for BL, and filtering the upsampled MB for BL, wherein the remaining pixels/pels of the MB for EL are generated and
wherein the generated or configured filter is used.

The interpolation filter for filtering the upsampled MB for BL is preferably a 2D non-separable filter. Non-separable are such filters that cannot be expressed as products of other filters of lower dimension. This refers to the optimal filter for encoding as well as to the generated or configured filter used for decoding.

In one embodiment, different adaptive filters are used for interpolating different pixel types, wherein e.g. one adaptive filter has even length and is used to interpolate pixels at half-pel positions, while another adaptive filter has odd length and is used to interpolate pixels at integer positions.

Advantageous embodiments of the invention are disclosed in the dependent claims, the following description and the figures.

Brief description of the drawings

Exemplary embodiments of the invention are described with reference to the accompanying drawings, which show in

Fig.1 the structure of an encoder for two spatially scalable layers;

Fig.2 upsampling of reconstructed base-layer frames to give a prediction of the enhancement-layer;

Fig.3 pixels generated by upsampling filters;

Fig.4 an Intra frames encoding process for two spatial scalable layers;

Fig.5 a) a symmetric filter with 9 coefficients;

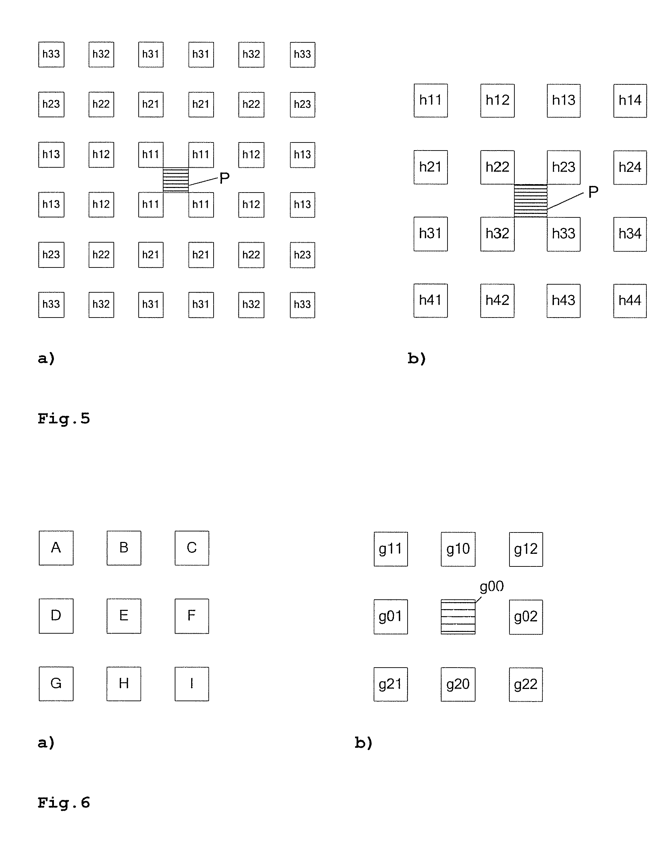

Fig.5 b) a non-symmetric filter with 16 coefficients;

Fig.6 a) Samples and b) weights of a filter to refine the integer pel samples;

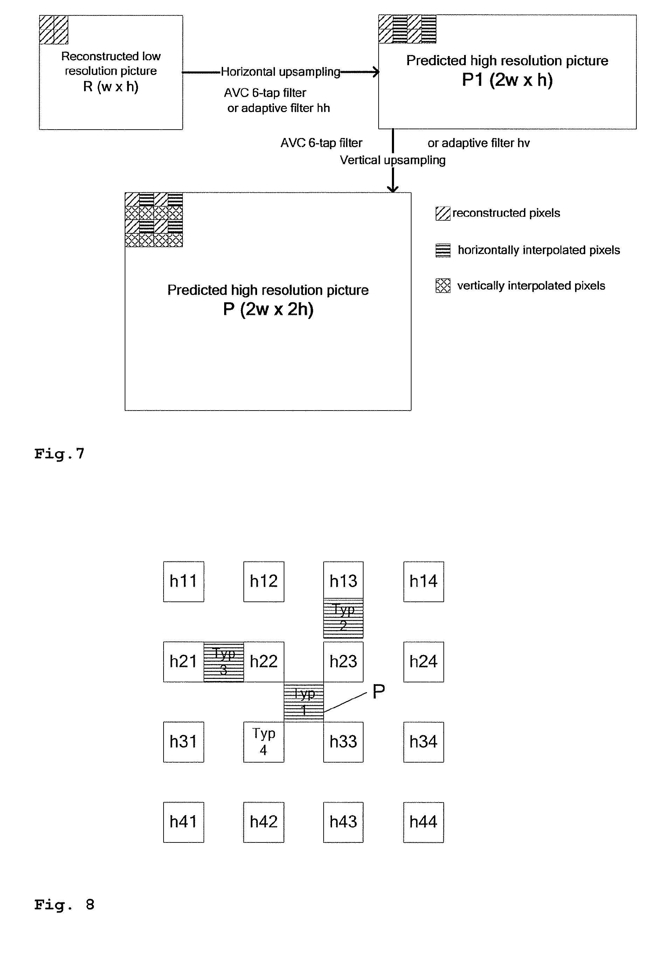

Fig.7 separate filters for horizontal and vertical upsamplings; and

Fig.8 different pixel types for interpolation.

Detailed description of the invention

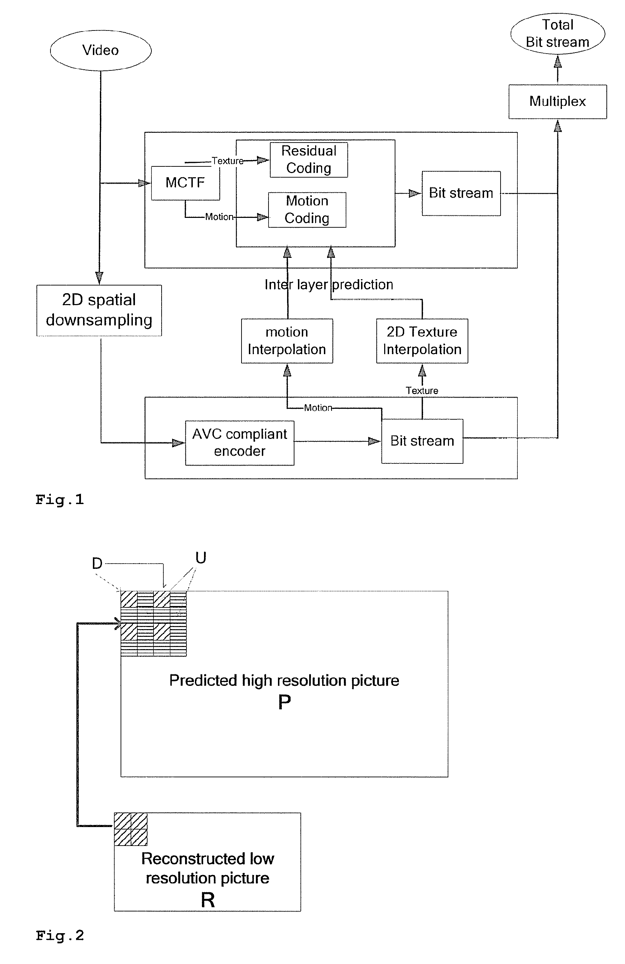

Fig. 1 shows generally the structure of an encoder that uses inter layer prediction for two spatially scalable layers.

From a video picture sequence, a base-layer (BL) being a low-resolution picture sequence is generated by 2D spatial downsampling. The downsampled pictures are encoded e.g. by an AVC compliant encoder that generates a bitstream, motion information and texture information. On the other hand, the enhancement layer (EL) being the video picture sequence in its full resolution is filtered by a motion compensated temporal filter MCTF that also generates motion and texture information. The motion information and the texture information are separately encoded, wherein inter layer prediction is used, i.e. the redundancy between EL and BL in motion and texture information is reduced.

While motion information processing uses interpolating techniques, for the texture information residual coding is used, which means that based on the pictures that were already processed and that will be available at the decoder a texture is predicted, the predicted picture is compared with the actual picture and the difference between the predicted and the actual picture (i.e. the residual) is determined, encoded and transmitted. In this example, the BL and the EL bitstreams are multiplexed to build the final bit stream. The encoder according to the invention has an improved inter layer prediction, and particularly improved texture interpolation, resulting in less data to be transmitted.

Fig.2 shows upsampling of a reconstructed BL frame to give a prediction of the EL. Exemplarily, a MB of the BL has 2x2 pixels and a MB of the EL has 4x4 pixels. The upsampled reconstructed BL picture R is used as a direct predictor of the high-pass frames, i.e. the samples from a MB of the EL frame P are predicted by the corresponding samples in the upsampled frame R. The pixels in the reconstructed low-resolution picture R, being the BL, are directly used for the odd samples in the predicted high-resolution picture P. These pixels have odd vertical and horizontal coordinates within the predicted high-resolution picture P, and are called odd subpicture D. The values of the other pixels U within the predicted high-resolution picture P that have no direct counterparts in the low-resolution picture R are generated by interpolation. So for SVC IntraBL mode, odd subpicture D is filled by the reconstructed low-resolution picture R. For the pixels in the non-odd subpicture U, conventionally the AVC 6-tap filter gives the interpolating values.

However, the pixels in low-resolution picture R don't necessarily give the best prediction for the pixels of the odd subpicture D. Besides interpolation for the other, non-odd pixels, i.e. subpicture U, those odd pixels also need refinement. So a filter is also given for pixels in the odd subpicture D.

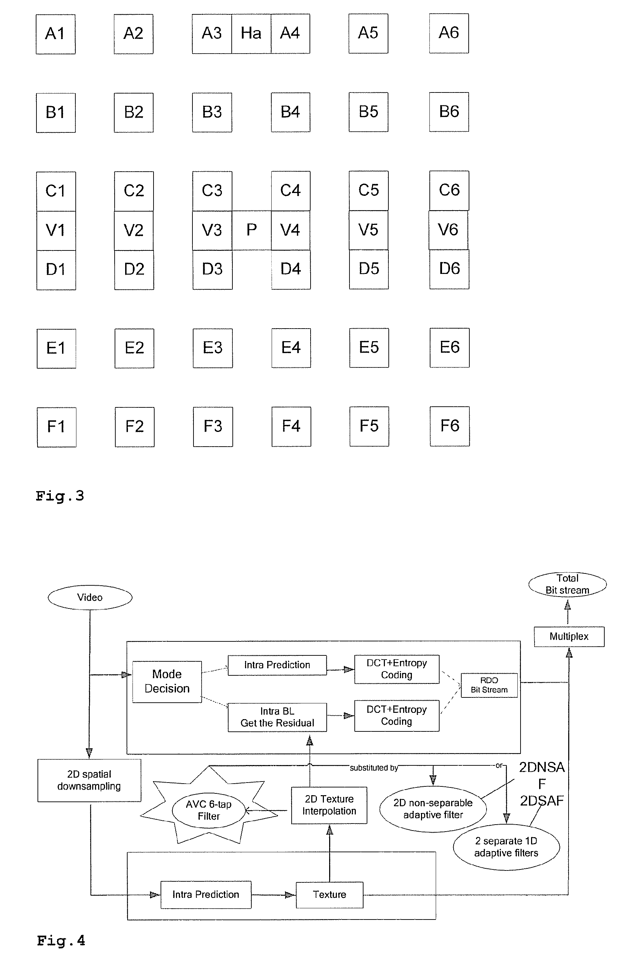

According to the invention, such conventional filter is substituted by an adaptive filter, and preferably an adaptive 2D non-separable filter, as shown in Fig.3. The thirty-six integer pel samples A1,...A6,B1...B6,... F1...F6 are used to generate the center pixel P in one filtering step. Conventionally, half pel samples V1,...,V6 are obtained in a first step by vertical interpolation using e.g. the AVC 6-tap filter. Then in a second step horizontal interpolation can provide the interpolated pixels Ha,P shown in Fig.3, resulting in a totally four-fold size picture.

Then the difference between the upsampled picture and the original high-resolution picture is determined, DCT transformed and entropy coded, as usual in the IntraBL mode. As shown in Fig.4, the only difference between the AVC Intra frame coding and SVC EL Intra frame coding is that SVC EL has one more mode, namely IntraBL, which upsamples the texture of the BL as a predictor of the high-resolution Intra picture of the EL. This predictor is generated from the BL texture by AVC 6-tap upsampling. Only the residual between the original high-resolution picture and the predictor picture is coded for IntraBL mode. The predictor picture is determined by the reconstructed BL picture and the 2D texture interpolation, as shown in Fig.4. For this invention, the reconstructed BL picture is assumed to be given while the texture interpolation is optimized. According to the invention, the conventional 1D filter is replaced by an optimized picture adaptive filter, or rather slice adaptive filter.

The adaptive filters as shown in Fig.4 are used to further improve the coding efficiency. These filters minimize the distortion of the prediction error between the upsampled frame and the original frames. The method can also be generalized to the cases with any set of the MBs. So the samples in MBs are defined as a BL slice and the samples in the corresponding (co-located) MBs are defined as an EL slice. Without loss of generality, we only simplify this description and discussion on whole pictures.

In a preferred embodiment, this filter for filtering the upsampled MB for BL is a non-separable two-dimensional (2D) adaptive filter. Non-separable filters are such filters that cannot be expressed as products of other filters of lower dimension, i.e. whose impulse response cannot be factored into a product of one-dimensional responses. 2D non-separable filters are a good choice for image processing since they advantageously reduce the horizontal and vertical bias, which occurs in images after non-linear processing and to which the human visual system is very sensitive. Thus, 2D non-separable filters provide "true" 2D sampling and filtering, since all structures within an image are treated equally independent from their respective direction. Further, the design of 2D non-separable filters is less restricted than the design of 1D separable filters.

In another embodiment however it may be two separate, optimized 1D adaptive filters.

Adaptive means that the coefficients, which define the characteristics of the filter, are modified depending on the contents to be filtered, i.e. the picture, GOP or slice. In other words, to improve the coding efficiency, especially when the bit-rate or resolution is relatively higher, non-separable picture level (slice or GOP level) content dependent upsampling filters are generated or configured in the encoder by an analytic approach, and the configuration data are written into the bit-stream so that a decoder on the receiver side can reconstruct the filter for correct decoding.

To get the optimal filters, optimization techniques such as method of least squares can be employed. We use an analytic solution for the problem. Then the filters are written into the bit-stream, and the decoder will extract them and use them for the MBs that use IntraBL mode.

Without loss of generality, we describe the process as if the set of MBs were images instead of slices. For an image $I$ and its downsampled image $L$ holds

$$L = \mathbf{H} \cdot I \cdot \mathbf{H}' \qquad (1)$$

where H is the below matrix and H' is its transpose.

$$\mathbf{H} = \begin{pmatrix} \ddots & & & & & \\ \cdots & h(2) & h(1) & h(0) & \cdots & \\ & \cdots & h(2) & h(1) & h(0) & \cdots \\ & & & & & \ddots \end{pmatrix} \qquad (2)$$

Here the filter h[n] is utilized horizontally and then vertically separately on the image. E.g. in JSVM the filter is

```
h[n]  =  [h[0],h[1],…]
      =  [2, 0,-4,-3, 5, 19, 26, 19, 5,-3,-4, 0, 2]/64.
```

If L is Intra coded as a BL image in SVC, it is reconstructed as image R. Note that if the BL is the first layer of the SVC, it is AVC compliant and it is coded using the Intra features of H.264/AVC.

In the following, a solution for the minimization of the prediction error is given.

The problem is to select a filter or a set of weighting coefficients w, such that the sum of square difference (SSD) between the upsampled image R and the original image I is minimized. Denote the sample value of the picture I at the pixel (x,y) as $S_{x,y}$, and the value in picture R as $R_{x,y}$. Here the value means the luminance component value. For the chrominance components, the same analysis can be used.

$$\arg\min_{\mathbf{W}} \left( \sum_{x,y} e_{x,y}^2 \right) = \arg\min_{\mathbf{W}} \sum_{x,y} \left( S_{x,y} - \sum_i \sum_j w_{i,j}^{SP} R_{x/2+i,y/2+j} \right)^2 \qquad (3)$$

In words, this means "find the parameter w that minimizes the sum $\Sigma e_{x,y}^2$". When we only interpolate the pixels that are not in the low-resolution picture to get picture U, i.e. only the pixels with not both coordinates being odd, the equation turns to:

$$\arg\min_{\mathbf{H}} \left( \sum_{(x,y)\neq(2l+1,2k+1)} e_{x,y}^2 \right) = \arg\min_{\mathbf{H}} \sum_{(x,y)\neq(2l+1,2k+1)} \left( S_{x,y} - \sum_i \sum_j h_{i,j} R_{l+i,k+j} \right)^2 \qquad (4)$$

If we consider giving a more accurate prediction of those odd pixels that are in the low-resolution pictures, we

have:

$$\arg\min_{\mathbf{F}}\left(\sum_{(x,y)=(2l+1,2k+1)} e_{x,y}^2\right) = \arg\min_{\mathbf{F}}\sum_{(x,y)=(2l+1,2k+1)}\left(S_{x,y}-\sum_i\sum_j h_{i,j}\,R_{l+i,k+j}\right)^2 \qquad (5)$$

So, for a given non-separable filter H, a set of samples R will influence a prediction error e of s by

$$e = s - \sum_t H_t R_{s-t} \qquad (6)$$

that is $e=s-H\cdot R$, where R is a column vector formed by the sample values and $t$ is the set of subscripts which correspond to the coordinates of the related pixels. If we have a series (R, s) and get the error vector $\bar{e}=(e_1,e_2,\cdots e_n)$, then the total distortion is

$$<\bar{e},\bar{e}> = <S-HR, S-HR> \qquad (7)$$

So the problem is:

$$\arg\min_{\mathbf{H}}\mathbf{E} = \arg\min_{\mathbf{H}} <S-HR, S-HR> \qquad (8)$$

There are various numerical optimization techniques for this problem. A simple choice is the method of least squares:

$$0 = \frac{\partial\mathbf{E}}{\partial\mathbf{H}} = \frac{\partial<S-HR,S-HR>}{\partial\mathbf{H}} = <-R,S-HR> + <S-HR,-R> = 2<R,HR-S> \qquad (9)$$

This is equivalent to

$$(HR-S)R' = 0 \qquad (10.1)$$

$$HRR' = SR' \qquad (10.2)$$

$$H = SR'/(RR') \qquad (10.3)$$

So, equation (10.3) is the only solution if RR' is reversible; else there are infinite solutions and we can pick one with small sum of all coefficients. Here, R' is the transpose of the matrix R.

In the following, possible forms of the non-separable filters are explained. Based on the analysis above, we basically divided the optimization of the prediction error into two processes. The first process is to get the interpolation filters for picture U, which includes the half pel samples that have no direct counterparts in the low-resolution picture.

This process is usually called interpolation. The second process is to get the interpolation filters for picture D, which includes the integer pel samples that have direct counterparts in the low-resolution picture. As a consequence of this process separation, the result will be two different filters.

For 2D non-separable cases, filters can be designed for different types of pixels. As shown in Fig.8, the type 1 pixels are those at half pel position vertically and horizontally; type 2 pixels are those at integer pel position horizontally while at half pel position vertically; type 3 pixels are those at half pel position horizontally while at integer pel position vertically, and type 4 pixels are the integer pixels.

For the first process, for the type 1 case, even-length filters for interpolation are constructed, e.g. a 2D filter with even length at each direction (e.g. a 6x6 filter), since the pixels V1,...,V6,Ha are located at the half pel position, as shown in Fig.3. For the type 2 case, filters of odd horizontal length and even vertical length are used, such as 3x4 or 1x6. For the type 3 case, filters of even horizontal length and odd vertical length are used, such as 4x3 or 1x6. More specifically, for type 1, we can also use filters with different vertical and horizontal length, so one possible case is a length of 4x6. For type 4 pixels, which are integer pixels already in the low-resolution picture, filters of odd length for vertical and horizontal direction are used, e.g. 1x5 or 3x3.

In Fig.3, e.g. Ha can be conventionally generated by horizontal interpolation using A1,A2,...A6 with the AVC 6-tap filter, V1 can be generated by vertical interpolation using A1,B1,...F1 with the AVC 6-tap filter, and P can be generated by horizontal interpolation using V1,V2,...,V6 with the AVC 6-tap filter in SVC. However, P can also be generated in a single step by using all the 36 pixels A1,A2...A6,B1...B6,F1...F6 with a non-separable 2D filter according to the invention. In this case, an advantage is that rounding or truncation errors are reduced, since all interpolated pixels are obtained directly from predicted pixels, instead of using previously interpolated pixels for a second interpolation step. Actually the common AVC 6-tap filter has also even-length and is symmetric. For a non-separable filter, e.g. a filter with 36 coefficients (weights) as shown in Fig.5 a), to reduce the complexity and to save bits for coding the coefficients, a trade-off is to design it as a symmetric filter, which has only nine coefficients that are identical for the upper left, upper right, lower left and lower right parts. The coefficients are duplicated in a symmetric way, as in Fig.5 a), thus building a symmetric 2D non-separable filter with effectively only 9 taps. If symmetric filters are not used, another trade-off is to use shorter filters, e.g. a non-separable 2D filter with 16 coefficients, as shown in Fig.5 b). The filter is for interpolating the half pel samples, picture U. In Fig.5, P is the pixel to be interpolated and $h_{i,j}$ are the weights corresponding to be the integer pel samples.

As mentioned above, another process is to get the set of the pixels that are already in the low-resolution picture, i.e. the picture D. In this case, odd filters are used. There is no further prediction for the integer samples in SVC, that means the filter is the simplest, only the central pixel weight is set to 1, other are set to 0, as shown in Fig.6: only g00 is 1 and the other coefficients are all set to 0, if we want to predict the center sample E conventionally. However, a more accurate way to do this is to also give an optimal solution for these pixels, that is the integer pixels A-D, F-I around are given weights $g_{11},g_{10},g_{12},g_{01},g_{02},g_{21},g_{20},g_{22}$ for the value of the central pixel in the predicted high-resolution picture. These filters are shorter, odd-length and are symmetric filters, to reduce the number of coefficients by four.

Another solution is to give adaptive filters for horizontal and vertical upsampling respectively. In this case, the problem is considered separately at the two directions and, based on the same analysis as the non-separable filter, the invention provides adaptive 1D filters for vertical and horizontal upsamplings. In the following, possible forms of these separable filters are given. The optimization objective can be divided into two steps. The first is to optimize the horizontal 1D filter, and the second step is to optimize the vertical 1D filter. Since the objective function has a similar form as eq. (3), we also have linear fitting solution. As shown in Fig.7, horizontal upsampling doubles the width of the picture and interpolates the horizontal half pel samples, then vertical upsampling doubles the height of the picture and interpolates the vertical half pel samples. According to the invention, the AVC 6-tap filter which is adopted both horizontally and vertically in SVC is substituted by horizontal filter and vertical filter respectively.

During the first step, odd lines of the original high-resolution picture I will be the objective picture that we are trying to fit. The samples in the top field of picture I will give the values of S in eq.(8). After we get the optimal filter for picture P1, P1 is generated and we start the second step. Based on eq.(4), now P1 will provide the values of R, and the original high-resolution picture I will provide the values of S. This is shown in Fig.7.

The form of these filters can obey the same rule as that of the non-separable 2D filter. For half-pel interpolation, even-length filters, such as 6-tap non-symmetric filter or 8-tap symmetric filter can be adopted; for integer pel sample refinement, even-length filters, such as 5-tap non-symmetric filter or 7-tap symmetric filter can be adopted.

Although these separable 1D filters can not give better linear fitting than non-separable 2D filters, they include less coefficients, and the numerical optimization process for them is less complex. E.g. the solution process of a matrix function process can be simplified from a 16x16 matrix problem to a 4x4 matrix problem.

Many filters keep the 1-norm, i.e. the sum of the coefficients is one. This can also be used to reduce the coefficients.

In one embodiment of the invention, the AVC 6-tap filter is kept for IntraBL mode and a flag is specified to denote whether or not the adaptive filter is adopted for a picture or slice.

Advantageously, the encoding method and signal according to the invention utilizes the same adaptive filter for a whole slice, so that the filter needs reconfiguration only for a new slice, but not for each MB. Thus, the amount of additional data to be transmitted is small.

The present invention provides optimal 2D non-separable interpolation filters for IntraBL mode of SVC, especially for Intra frames. For spatial scalability, a reconstructed low-resolution picture is used to predict a high-resolution picture, usually by employing the fixed H.264/AVC interpolation. However, to minimize the prediction error energy, adaptive filters are used to improve the coding efficiency at picture or slice level.

The given analysis solution of the filters is advantageous not only for interpolating the pixels that are not in the low-resolution picture (3/4 pixels in the upsampled picture) that needs half pel interpolation, but also for the refinement of pixels already in the low-resolution picture (1/4 odd pixels in the upsampled picture, integer pel samples). This method can also be adopted by the case of non-dyadic spatial scalability. Non-dyadic is the case when the size of the EL picture is not double width or double height of the BL picture.

SVC introduces IntraBL mode to reduce the redundancy between the reconstructed low resolution frame and the original high resolution frame that is about to be encoded, especially for the Intra MBs and Intra pictures. Current standard adopts the AVC 6-tap Wiener interpolation filter for the upsampling. For the prediction picture, 1/4 of the odd samples keep unchanged and the other 3/4 samples are interpolated by the filter first horizontally, then vertically. The residual of the prediction frame and the original high-resolution frame is DCT transformed and entropy coded. This is also the IntraBL mode of SVC, which is the common way to de-correlate the intra frames between spatial layers.

The gist of the invention is an improvement of the coding efficiency of the EL, especially the coding efficiency of the intra frames, which relies on the performance of IntraBL mode. To improve the IntraBL mode, the invention provides a scheme which employs adaptive 2D non-separable or 1D separable filters for the upsampling. Optimization techniques such as least-square fitting give the optimal solution for the SSD (Sum of Square Differences). The filters are recorded into the bit-stream and will give better (judged by distortion) prediction of the high-resolution pictures.

Main advantage of the invention is that the proposed adaptive non-separable filter will improve the performance of IntraBL, which will lead to improvement of coding efficiency of the Intra frames of the spatial EL and eventually benefit the coding efficiency of the MCTF structure of the EL by reducing the possible error propagation from the Intra frames.

A flag indicating the use of an adaptive filter, the filter type (whether to use 1D filter or 2D filter etc), filter lengths and the coefficients of the filters are all written into the bit-stream, preferably in a packet directly after the slice header.

The encoding method and encoder according to the invention can be used in video coding products, and the decoding method and decoder according to the invention can be used in video decoding products, particularly for spatially scalable video.

**Claims**

1. A method for encoding video data, the video data being structured in slices or frames, comprising the steps of

   - separating the video data into spatial base-layer and spatial enhancement-layer picture;
   - encoding the spatial base-layer picture, wherein different encoding modes may be used and a mode selection process is employed, and wherein one of the different encoding modes is Intra coding;
   - determining characteristics of the video data to be filtered;
   - defining coefficients of an adaptive filter, wherein the definition is valid at least for a slice, and wherein the defining is based on the determined characteristics of the video data to be filtered and uses a rate-distortion optimization;
   - determining for a spatial base-layer picture that it is Intra coded;
   - upsampling the determined spatial base-layer picture;
   - filtering the upsampled base-layer picture using an adaptive filter with the defined coefficients, wherein a reconstructed picture is generated;
   - calculating the difference between the original enhancement-layer picture and the reconstructed picture;
   - encoding the difference; and
   - generating and outputting a bitstream that includes the encoded spatial base-layer picture, the encoded difference and information defining the coefficients of the adaptive filter.

2. Method according to claim 1, wherein the adaptive filter is a 2D non-separable adaptive filter.

3. Method according to claim 1, wherein the adaptive filtering uses two different 1D adaptive filters.

4. Method according to any of claims 1-3, wherein the adaptive filter is symmetric in horizontal and vertical direction.

5. Method according to any of claims 1-4, wherein the coefficients of different adaptive filters are defined and wherein a first of the defined adaptive filters has even length and is used to interpolate pixels at half-pel positions, and wherein a second of the adaptive filters has odd length and is used to interpolate pixels at integer positions.

6. Method according to any of claims 1-5, wherein the encoded video data is packetized, and wherein the information defining the coefficients of the adaptive filter are put into a packet immediately after the slice header packet.

7. Method according to any of claims 1-6, wherein the rate-distortion optimization uses the relation H=SR'/RR' with H being the filter coefficients, S being the samples to be filtered, R being the reconstructed low-resolution picture and R' being the transpose of R.

8. Video signal encoded using a method according to any of the claims 1-7.

9. Method for decoding encoded video data, the video data being structured in slices or frames, including the steps of

- receiving a bitstream containing the encoded video data;
- extracting and storing filter specification data from the packet immediately after the slice header;
- generating or configuring a filter using the filter specification data;
- detecting that a base-layer macroblock was encoded in IntraBL mode;
- for the detected base-layer macroblock, decoding and upsampling the intra-coded base-layer macroblock;
- filtering the upsampled macroblock using said filter to generate the remaining pixels or pels of the enhancement-layer macroblock.

10. Method according to the previous claim, wherein said generated or configured filter is used for all base-layer macroblocks of the same slice that were encoded using IntraBL mode.

11. Method according to claim 9 or 10, wherein said generated or configured filter is a 2D non-separable adaptive filter.

12. Apparatus for encoding video data, the video data being structured in slices or frames, including

- means for separating the video data into spatial base-layer and spatial enhancement-layer pictures;
- means for downsampling the spatial base-layer pictures;
- means for encoding the downsampled spatial base-layer pictures, wherein different encoding modes may be used and a mode selection process is employed, and wherein one of the different encoding modes is Intra coding;
- means for determining characteristics of the video data to be filtered;
- means for defining coefficients of an adaptive filter, wherein the definition is valid at least for a slice, and wherein the defining is based on the determined characteristics of the video data to be filtered and uses rate-distortion optimization;
- means for determining for a spatial base-layer picture that it is Intra coded;
- means for upsampling the determined spatial base-layer picture;
- means for filtering the upsampled base-layer picture using an adaptive filter with the defined coefficients, wherein a reconstructed picture is generated;
- means for calculating the difference between the original enhancement-layer picture and the reconstructed picture;
- means for encoding the difference; and
- means for generating and outputting a bitstream that includes the encoded spatial base-layer picture, the encoded difference and information defining the coefficients of the adaptive filter.

13. Apparatus for decoding encoded video data, the video data being structured in slices or frames, including the steps of

- means for receiving a bitstream containing the encoded video data;
- means for extracting and storing filter specification data from the packet immediately after the slice header;
- means for generating or configuring a filter using the filter specification data;
- means for detecting that a base-layer macroblock was encoded in IntraBL mode;
- means for decoding and upsampling the detected intra-coded base-layer macroblock;
- means for filtering the upsampled macroblock using said filter to generate the remaining pixels or pels of the enhancement-layer macroblock.

**Fig.1**

**Fig.2**

| A1 | | A2 | | A3 | Ha | A4 | | A5 | | A6 |

| B1 | | B2 | | B3 | | B4 | | B5 | | B6 |

| C1 | C2 | C3 | C4 | C5 | C6 |
| V1 | V2 | V3 | P | V4 | V5 | V6 |
| D1 | D2 | D3 | D4 | D5 | D6 |

| E1 | E2 | E3 | E4 | E5 | E6 |

| F1 | F2 | F3 | F4 | F5 | F6 |

Fig.3

Fig.4

| | | | | | |
|------|------|------|------|------|------|
| h33 | h32 | h31 | h31 | h32 | h33 |
| h23 | h22 | h21 | h21 | h22 | h23 |
| h13 | h12 | h11 | h11 | h12 | h13 |
| h13 | h12 | h11 | h11 | h12 | h13 |
| h23 | h22 | h21 | h21 | h22 | h23 |
| h33 | h32 | h31 | h31 | h32 | h33 |

P

a)

| | | | |
|------|------|------|------|
| h11 | h12 | h13 | h14 |
| h21 | h22 | h23 | h24 |
| h31 | h32 | h33 | h34 |
| h41 | h42 | h43 | h44 |

P

b)

Fig.5

| | | |
|---|---|---|
| A | B | C |
| D | E | F |
| G | H | I |

a)

| | | |
|-----|-----|-----|
| g11 | g10 | g12 |
| g01 | g00 | g02 |
| g21 | g20 | g22 |

b)

Fig.6

Fig.7

Fig. 8

**European Patent Office**

**EUROPEAN SEARCH REPORT**

Application Number

EP 05 30 0613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHWARZ H ET AL: "Scalable Extension of H.264/AVC"<br>March 2004 (2004-03), ISO/IEC JTC1/CS29/WG11 MPEG04/M10569/S03, XX, XX, PAGE(S) 1-39 , XP002340402<br>* paragraph [3.2.3] *<br>----- | 1-13 | H04N7/26 |
| Y | S. HAYKIN: "Adaptive Filter Theory"<br>2002, PRENTICE HALL , XP002352831<br>* page 385 - page 399 *<br>----- | 1-13 | |

TECHNICAL FIELDS SEARCHED (IPC)

H04N

The present search report has been drawn up for all claims

| Place of search | Date of completion of the search | Examiner |
|---|---|---|
| The Hague | 25 January 2006 | Berbain, F |